# EUROPEAN PATENT SPECIFICATION

(11) **EP 4 483 979 B1**
(45) Date of publication and mention of the grant of the patent: **15.10.2025**
(21) Application number: 23711114.1
(22) Date of filing: 24.01.2023
(51) Int. Cl.: B01D 3/10, B01D 7/00

(54) **VACUUM SUBLIMATION DEVICE**
VAKUUMSUBLIMATIONSVORRICHTUNG
DISPOSITIF DE SUBLIMATION PAR LE VIDE

(30) Priority: 22.02.2022 ES 202230143
(43) Date of publication of application: 01.01.2025
(73) Proprietor: Consejo Superior de Investigaciones Científicas (CSIC), 28006 Madrid (ES); Institució Catalana De Recerca I Estudis Avançats (ICREA), 08010 Barcelona (ES)
(72) Inventor: HERRERA MIRANDA, Daniel, 08193 Bellaterra, Barcelona (ES); GONZÁLEZ CAMPO, Arántzazu, 08193 Bellaterra, Barcelona (ES); ALIAGA ALCALDE, Núria, 08010 Barcelona (ES)
(74) Representative: Elzaburu S.L.P.
(86) International application number: PCT/ES2023/070034
(87) International publication number: WO 2023/161540

(56) References cited:
- WO-A1-2013/035755
- GB-A- 1 156 115
- US-A1- 2006 263 279
- US-A1- 2008 299 023

## Description

### OBJECT OF THE INVENTION

The object of the invention falls within the technical field corresponding to physical phenomena, specifically, to the sector belonging to the sublimation of solid bodies using vacuum.

The invention deals with a vacuum sublimation device that allows the stabilisation of a solid body to be sublimated directly on an analysable sample plate while being adaptable in height to the volume and certain boundary conditions for each sublimable solid.

### BACKGROUND OF THE INVENTION

Sublimation is understood as the transition of a substance directly from the solid state to the gaseous state without going through the liquid state, being an endothermic process that occurs at temperatures and pressures below the triple point of a substance in its phase diagram, corresponding to the lowest pressure at which the substance can exist as a liquid.

On the one hand, vacuum sublimation methods have wide use in the purification and recrystallisation of molecular species, including the possibility of selectively separating polymorphs/enantiomers.

On the other hand, the sublimation of molecules using UHV (Ultra High Vacuum) techniques provides studies and reactivity of said units on different substrates, where it is possible to characterise the molecular organisation and reactivity of new molecular-based materials, avoiding undesired solvents and residues.

In the study of crystalline materials for electronic devices, the first path requires subsequent steps towards deposition on the chosen substrates or the successive growth of the crystals towards the creation of adequate electronic connections, limiting the studies to large size crystals.

The second path requires highly specialised and complex pieces of equipment with the intention of reaching pressures below 10⁻⁷ millibars, that is, pressures below the triple point of molecular substances.

In addition, ultra-high vacuum sublimation pieces of equipment are very specific and complex pieces of equipment, implying greater difficulty in preparing the samples in said devices, limiting the use of such devices in conventional laboratories, and furthermore, the parts that make up said devices are not interchangeable, so that if there is a defect, it would be necessary to recalibrate and repair the complete equipment instead of part by part.

Moreover, conventional sublimation pieces of equipment are made up of two parts, a container in which the solid to be sublimated is located and a glass receiver through which water circulates where the solid is deposited in a gaseous state to cool it and collect it in solid form, representing a drawback in terms of solids analysis times because the receiver part has to be subjected to solid purification and extraction processes after sublimation, as well as a drawback in terms of analysis and measurement errors derived from the passage of the solid from the receiver part to the laboratory analysis part.

In addition, for each of the conventional pieces of equipment, the receptor part is a unique part of each equipment, so that the distance with respect to the solid prior to sublimation located in the container is a fixed distance. This event results in the difficulty of controlling the amount of solid that is deposited in the receiver. In other words, covering the receiver part with a specific amount of solid can take a long time depending on the substances and the distance that said solid must travel in a gaseous state until it contacts the glass receiver. An example of an existing vacuum sublimation device is disclosed in US2008/299023.

### DESCRIPTION OF THE INVENTION

The present invention tries to offer a solution in which the sublimated solid is deposited in a receiver plate that is directly analysable, preventing errors during the transfer of conventional receiver parts to measuring plates and speeding up analysis times in laboratories of solid substances that are sublimated; at the same time that it offers a solution in which the device can be adjustable in height depending on the volume, density or surface of the solid to be sublimated, and therefore, of the receiver plate, without the need to dimensionally modify the container in which the solid is located based on the volume thereof.

Likewise, the device object of the invention can be used directly in standard laboratories, not subject to specific environmental conditions, allowing the deposition of the sublimated material, in a single step, on a variety of surfaces, substrates and/or preformed devices, without the need for intermediate steps between devices for sample analysis.

In addition, the common glassware components together with the use of support parts obtained by means of 3D printing, with structural stability at temperatures less than 200 °C, preferably, make the entire system affordable for conventional characterisations and easily repairable, replaceable or modifiable, because the parts can be exchanged and adapted to each other depending on the amount to be sublimated and the surface to be used.

3D printing materials the thermal properties of which allow the use of the device at temperatures higher than 200 °C can also be used, that is, the device can be made up of parts that can adapt to variable external conditions, without resulting in a specific device for a temperature condition and specific pressure. Moreover, said parts do not need to be made by means of 3D printing, but can be manufactured from other material production means such as Teflon by machining.

On this matter, the direct sublimation device intended to perform sublimation work on solid substances using vacuum comprises a container with an essentially cylindrical geometry and which is open at the upper area, wherein the solid to be sublimated using vacuum sublimation is located, mainly in powder form, said container being able to incorporate a series of measurement indicators arranged on the outer wall thereof.

The device object of the invention also comprises an upper head coupled to the container, being made of glass and which is equipped with a first and a second access, wherein the second access has a larger cross section than the first, equipping the upper head with a bottle head geometry.

The first access is connected to a vacuum generating machine, both complex laboratory machines and conventional vacuum pumps, the vacuum generation flow of which can be controlled directly from the vacuum generating machine or can be controlled by means of a step element, which can be a stopcock, coupled transversely to the upper head; and by rotating it, same obstructs or allows the passage of the vacuum generation flow through the inside of the upper head from the first to the second access.

The sublimation device object of the invention also comprises a central core internally coupled to the upper head through the area of the second access, by means of pressure against the internal walls of said upper head and extended towards the inside of the container, said central core being vertically adjustable with respect to said upper head, adapting to the different amounts of solids to be sublimated.

The central core is formed by an upper coupling internally linked to the second access of the upper head. Said coupling, in turn, comprises a threaded hole through which a support is threadedly coupled by means of a threaded rod that extends superiorly from a base of said support.

By rotating about its axis, the support increases or decreases its distance with respect to the coupling, and, additionally, with respect to the solid located in the container. Likewise, due to the measurement indicators, it is possible to know the distance at which the support is adjustable with respect to the sublimable solid and, additionally, with respect to the coupling.

To favour the analysis of the sample and the distances to place the support with respect to the solid, the container is equipped with measurement indicators marking different adjustment points of the height of the support depending on the solid and the pressure and temperature characteristics used during the sublimation process.

On the one hand, the coupling is equipped, in addition to a threaded hole, with an external indentation that extends around the perimeter of said coupling and where a pressure element fits, which can be an elastic pressure gasket, which favours the fastening of the coupling against the inner walls of the upper head.

On the other hand, the support additionally comprises a fastening gauge that is fixed to the base by means of fastening elements, which can be screws or clamping plates. Said gauge can also present an essentially cylindrical geometry, also in accordance with the geometry of the base and the coupling; and it has a slot intended to house a sample receiver that collects the substances derived from the sublimation of the solid located in the container, in the lower portion thereof, directly against its surface, said sample receiver being able to be an electrode wherein the sample is analysed directly, an FET type device, a piece of paper, etc.

With the vacuum generating machine, that is, the vacuum pump connected to the device, a vacuum is generated inside said device, sublimating the substance located inside it. If the substance requires heat, to complete the sublimation process, the device can be placed on a hot surface or, for example, a silicone bath at a controlled temperature.

The amount of material deposited by sublimation can be controlled by time, as well as by adjusting the distance between the sample collection plate and the base of the cup, or a combination of both.

Finally, the device is depressurised to break the vacuum, depending on the nature of the substance, disconnecting the vacuum pump or passing air or an inert gas.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, which by way of illustration and not limitation, the following has been represented:
Figure 1 shows a perspective view of a first exemplary embodiment of the vacuum sublimation device.
Figure 2 shows an exploded view of the vacuum sublimation device.
Figure 3 shows an exploded view of a second exemplary embodiment of the vacuum sublimation device.

### PREFERRED EMBODIMENT OF THE INVENTION

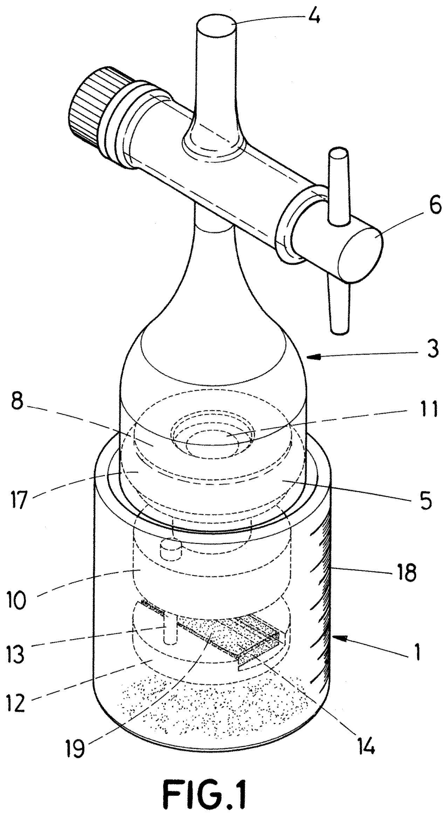

With the help of Figures 1 to 3, a series of exemplary embodiments of the vacuum sublimation device are described.

Figure 1 shows a perspective view of a first exemplary embodiment of the vacuum sublimation device, intended to be connected to a vacuum generating machine and to house a sublimable solid body comprising a container (1) which is open at an upper area (2) intended to house the sublimable solid body inside, which can also be equipped with measurement indicators (18); and a hollow upper head (3) associated with the vacuum generating machine and coupled to the container (1) intended to allow the passage of vacuum flow through the inside thereof.

Said upper head (3) is equipped, in turn, with a first access (4) intended to receive a connection means for connecting with the vacuum generating machine, a second access (5) that receives the container (1) through the upper area (2) thereof.

Likewise, the device can be equipped with a passage element (6) transversally coupled to the upper head (3) and which allows the passage of the vacuum flow coming from the vacuum generating machine between the first and second access (4, 5) of said upper head (3). Preferably, the second access (5) has a larger cross section than the first access (4), equipping the upper head (3) with a bottle geometry.

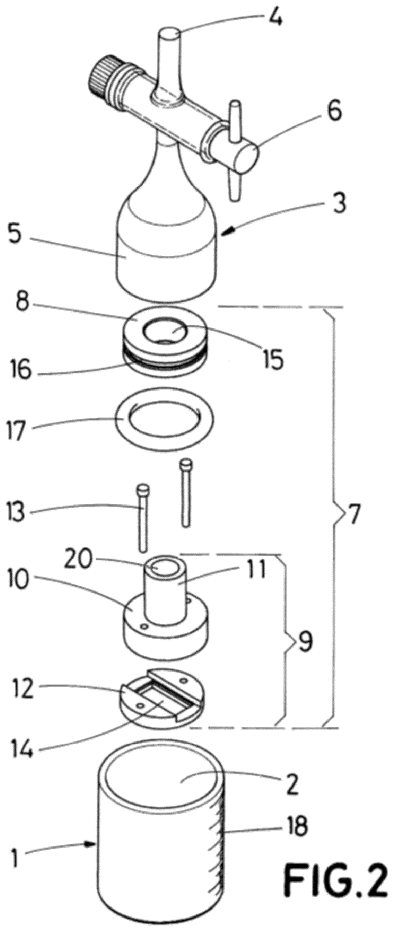

In addition to Figure 1, Figure 2 shows an exploded view of the device object of the invention, wherein it can be seen that it additionally has a central core (7) that is internally coupled to the upper head (3) through the second access (5) and located inside the container (1), said central core (7) being equipped with a coupling (8) internally linked to the second access (5) of the upper head (3), a support (9) attached in a threaded manner with the coupling (8) and adjustable in height by means of a threaded rotation with respect to said coupling (8), and a sample receiver (19) located in the support (9) and intended to directly collect the samples of the solid substance in a gaseous state through the lower portion thereof.

On the one hand, the coupling (8) comprises an external indentation (16) extending around the perimeter and a pressure gasket (17) housed in said external indentation (16) intended to fasten the coupling (8) internally against the upper head (3) through the second access (5) thereof, as well as a threaded hole (15).

Moreover, the support (9) is made up of a base (10) that incorporates a threaded rod (11) which couples with the threaded hole (15) of the coupling (8) and by rotating on its own axis allows said support (9) to be adjusted in height with respect to the coupling (8) and a gauge (12) coupled to the base (10) by means of fastening elements (13), preferably fastening screws, which is equipped with a slot (14) wherein the sample receiver (19) is supported so that the sublimated solid substance impacts and is collected against the lower wall of the sample receiver (19).

The measurement indicators (18) of the container (1) mark the height with respect to the coupling (8) and/or with respect to the solid to be sublimated where the gauge (12) and therefore the sample receiver (19) must be established.

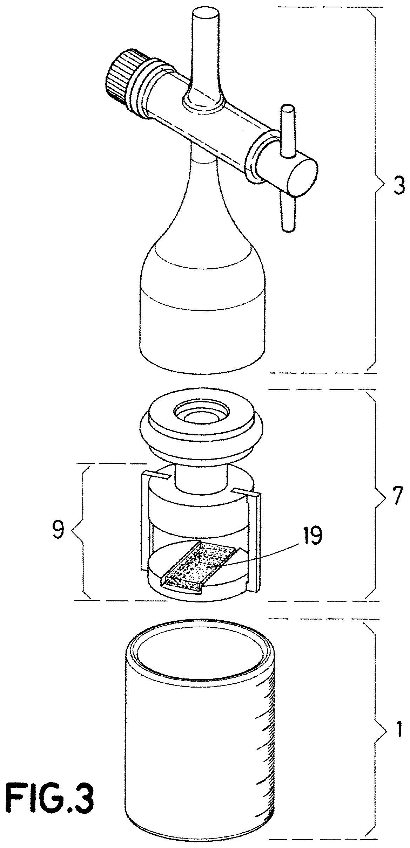

Finally, Figure 3 shows an exploded perspective view of a second exemplary embodiment of the invention, wherein the fastening elements (13) are clamping plates adapted to the base (10) of the support (9) and to the fastening gauge (12), linking both elements together by means of a quick coupling instead of using screws.

## Claims

1. A vacuum sublimation device intended to be connected to a vacuum generating machine and to house a sublimable solid substance comprising:
- a container (1) which is open at an upper area (2) intended to house the sublimable solid substance inside, and
- a hollow upper head (3) associated with the vacuum generating machine and coupled to the container (1), intended to allow the passage of vacuum flow through the inside thereof and which is equipped with a first access (4) intended to receive a connection means for connecting with the vacuum generating machine and with a second access (5) that receives the container (1) through the upper area (2) thereof;
- a central core (7) that is internally coupled to the upper head (3) by the second access (5) and located inside the container (1), said central core (7) being equipped with:
- a coupling (8) comprising a threaded hole (15) to be internally linked to the second access (5) of the upper head (3),
- a support (9) threadedly connected with the coupling (8) and movable with respect to said coupling (8) by means of threaded rotation,
- a sample receiver (19) located in the support (9) and intended to receive samples of the sublimable solid substance located inside the container (1) through the lower portion thereof.
the vacuum sublimation device being **characterized in that**:
- the support (9) comprises:
- a base (10)
- a threaded rod (11) that starts superiorly from said base (10), and
- a gauge (12) where the sample receiver (19) is located,
wherein:
- both the base (10) and the threaded rod (11) comprise a through hole (20),
- the threaded rod (11) is configured to be coupled with the threaded hole (15) of the coupling (8), thus allowing said support (9) to be adjusted in height with respect to the coupling (8); and
- the gauge (12) is coupled to the base (10) by means of fastening elements (13).

2. The vacuum sublimation device according to claim 1, which additionally comprises a passage element (6) transversely coupled to the upper head (3) and which allows the passage of the vacuum flow coming from the vacuum generating machine between said first and second access (4, 5) of the upper head (3).

3. The vacuum sublimation device according to claim 1, wherein the first access (4) of the upper head (3) has a smaller cross section than the second access (5) of said upper head (3).

4. The vacuum sublimation device according to claim 1, wherein the coupling (8) comprises an external indentation (16) extending around the perimeter and a pressure gasket (17) housed in said external indentation (16) intended to fasten the coupling (8) internally against the upper head (3) through the second access (5) thereof.

5. The vacuum sublimation device according to claim 1, wherein the gauge (12) is equipped with a slot (14) of essentially rectangular geometry wherein the sample receiver (19) is located.

6. The vacuum sublimation device according to claim 1, wherein the fastening elements (13) are fastening screws.

7. The vacuum sublimation device according to claim 1, wherein the fastening elements (13) are clamping plates.

8. The vacuum sublimation device according to claim 1, wherein the container (1) is equipped with measurement indicators (18) intended to mark the adjustment height of the gauge (12) with respect to the coupling (8) and/or with respect to the solid to be sublimated.

## Patentansprüche

1. Vakuumsublimationsvorrichtung, die dazu bestimmt ist, mit einem Vakuumerzeuger verbunden zu werden und eine sublimierbare feste Substanz aufzunehmen, umfassend:
- einen Behälter (1), der in einem oberen Bereich (2) offen und dazu bestimmt ist, die sublimierbare feste Substanz darin aufzunehmen, und
- einen hohlen oberen Kopf (3), der mit dem Vakuumerzeuger verbunden und an den Behälter (1) gekoppelt ist, der dazu bestimmt ist, einen Vakuumfluss durch das Innere davon zu ermöglichen, und der mit einem ersten Zugang (4) ausgestattet ist, der dazu bestimmt ist, ein Anschlussmittel zum Anschließen an den Vakuumerzeuger aufzunehmen, und mit einem zweiten Zugang (5), der den Behälter (1) durch dessen oberen Bereich (2) aufnimmt;
- einen zentralen Kern (7), der intern durch den zweiten Zugang (5) an den oberen Kopf (3) gekoppelt ist und sich im Inneren des Behälters (1) befindet, wobei der zentrale Kern (7) mit Folgendem ausgestattet ist:
- eine Kupplung (8), die ein Gewindeloch (15) umfasst, das innen mit dem zweiten Zugang (5) des oberen Kopfes (3) verbunden ist,
- einen Träger (9), der mit der Kupplung (8) verschraubt ist und mittels Gewindedrehung in Bezug auf die Kupplung (8) beweglich ist,
- eine Probenaufnahme (19), die sich in dem Träger (9) befindet und dazu bestimmt ist, Proben der sublimierbaren festen Substanz, die sich im Inneren des Behälters (1) befindet, durch dessen unteren Abschnitt aufzunehmen.
wobei die Vakuumsublimationsvorrichtung **dadurch gekennzeichnet ist, dass**
- der Träger (9) umfasst:
- eine Basis (10)
- eine Gewindestange (11), die oben von der Basis (10) ausgeht, und
- ein Messgerät (12), an dem sich der Probenaufnahme (19) befindet,
wobei:
- sowohl die Basis (10) als auch die Gewindestange (11) ein Durchgangsloch (20) umfassen, die Gewindestange (11) dazu konfiguriert ist, mit dem Gewindeloch (15) der Kupplung (8) gekoppelt zu werden, wodurch ermöglicht wird, dass der Träger (9) in Bezug auf die Kupplung (8) in der Höhe eingestellt werden kann; und
- das Messgerät (12) mittels Befestigungselementen (13) an die Basis (10) gekoppelt ist.

2. Vakuumsublimationsvorrichtung nach Anspruch 1, die zusätzlich ein Durchgangselement (6) umfasst, das quer an den oberen Kopf (3) gekoppelt ist und den Durchgang des von dem Vakuumerzeuger kommenden Vakuumflusses zwischen dem ersten und zweiten Zugang (4, 5) des oberen Kopfes (3) ermöglicht.

3. Vakuumsublimationsvorrichtung nach Anspruch 1, wobei der erste Zugang (4) des oberen Kopfes (3) einen kleineren Querschnitt als der zweite Zugang (5) des oberen Kopfes (3) aufweist.

4. Vakuumsublimationsvorrichtung nach Anspruch 1, wobei die Kupplung (8) eine äußere Einkerbung (16), die sich um den Umfang erstreckt, und eine Druckdichtung (17), die in der äußeren Einkerbung (16) untergebracht ist, umfasst, die dazu bestimmt ist, die Kupplung (8) durch den zweiten Zugang (5) davon innen an dem oberen Kopf (3) zu befestigen.

5. Vakuumsublimationsvorrichtung nach Anspruch 1, wobei das Messgerät (12) mit einem Schlitz (14) mit im Wesentlichen rechteckiger Geometrie ausgestattet ist, in dem sich die Probenaufnahme (19) befindet.

6. Vakuumsublimationsvorrichtung nach Anspruch 1, wobei die Befestigungselemente (13) Befestigungsschrauben sind.

7. Vakuumsublimationsvorrichtung nach Anspruch 1, wobei die Befestigungselemente (13) Klemmplatten sind.

8. Vakuumsublimationsvorrichtung nach Anspruch 1, wobei der Behälter (1) mit Messindikatoren (18) ausgestattet ist, die dazu bestimmt sind, die Einstellhöhe des Messgeräts (12) in Bezug auf die Kupplung (8) und/oder in Bezug auf die zu sublimierende feste Substanz zu markieren.

## Revendications

1. Dispositif de sublimation sous vide destiné à être connecté à une machine génératrice de vide et à accueillir une substance solide sublimable comprenant :
- un récipient (1) qui est ouvert au niveau d'une zone supérieure (2), destiné à accueillir la substance solide sublimable à l'intérieur, et
- une tête supérieure creuse (3) associée à la machine génératrice de vide et couplée au récipient (1), destinée à permettre le passage du flux de vide à l'intérieur de celui-ci et qui est équipée d'un premier accès (4) destiné à recevoir un moyen de connexion pour se connecter à la machine génératrice de vide et d'un deuxième accès (5) qui reçoit le récipient (1) à travers la zone supérieure (2) de celui-ci ;
- un noyau central (7) qui est couplé intérieurement à la tête supérieure (3) par le deuxième accès (5) et situé à l'intérieur du récipient (1), ledit noyau central (7) étant équipé de :
- un raccord (8) comprenant un trou fileté (15) à relier intérieurement au deuxième accès (5) de la tête supérieure (3),
- un support (9) relié par filetage au raccord (8) et mobile par rapport audit raccord (8) au moyen d'une rotation filetée,
- un récepteur d'échantillons (19) situé dans le support (9) et destiné à recevoir des échantillons de la substance solide sublimable située à l'intérieur du récipient (1) à travers la partie inférieure de celui-ci,
le dispositif de sublimation sous vide étant **caractérisé en ce que** :
- le support (9) comprend :
- une base (10)
- une tige filetée (11) qui commence au-dessus de ladite base (10), et
- une jauge (12) où est situé le récepteur d'échantillons (19),
dans lequel :
- la base (10) et la tige filetée (11) comprennent un trou traversant (20), la tige filetée (11) est configurée pour être couplée au trou fileté (15) du raccord (8), permettant ainsi audit support (9) d'être ajusté en hauteur par rapport au raccord (8) ; et
- la jauge (12) est couplée à la base (10) au moyen d'éléments de fixation (13).

2. Dispositif de sublimation sous vide selon la revendication 1, qui comprend en outre un élément de passage (6) couplé transversalement à la tête supérieure (3) et qui permet le passage du flux de vide provenant de la machine génératrice de vide entre lesdits premier et deuxième accès (4, 5) de la tête supérieure (3).

3. Dispositif de sublimation sous vide selon la revendication 1, dans lequel le premier accès (4) de la tête supérieure (3) a une section transversale plus petite que le deuxième accès (5) de ladite tête supérieure (3).

4. Dispositif de sublimation sous vide selon la revendication 1, dans lequel le raccord (8) comprend une indentation externe (16) s'étendant autour du périmètre et un joint de pression (17) logé dans ladite indentation externe (16) destiné à fixer le raccord (8) à l'intérieur contre la tête supérieure (3) à travers le deuxième accès (5) de celle-ci.

5. Dispositif de sublimation sous vide selon la revendication 1, dans lequel la jauge (12) est équipée d'une fente (14) de géométrie essentiellement rectangulaire dans laquelle le récepteur d'échantillons (19) est situé.

6. Dispositif de sublimation sous vide selon la revendication 1, dans lequel les éléments de fixation (13) sont des vis de fixation.

7. Dispositif de sublimation sous vide selon la revendication 1, dans lequel les éléments de fixation (13) sont des plaques de serrage.

8. Dispositif de sublimation sous vide selon la revendication 1, dans lequel le récipient (1) est équipé d'indicateurs de mesure (18) destinés à marquer la hauteur d'ajustement de la jauge (12) par rapport au raccord (8) et/ou par rapport au solide à sublimer.
